# EUROPEAN PATENT APPLICATION

(11) **EP 1 308 877 A1**
(43) Date of publication of application: **07.05.2003**
(21) Application number: 01410143.0
(22) Date of filing: 31.10.2001
(51) Int. Cl.: G06K 9/20

(54) **Till receipt reader**

(71) Applicant: Accenture Global Services GmbH, 8212 Neuhausen Am Rheinfall (Schaffhausen) (CH)
(72) Inventor: Goodyear, Mark, NE65 9NU (GB); Illsley, Martin, 06520 Magagnosc (FR); Kaldor, Jonathan, 06130 Grasse (FR); Berglund, David, 06600 Antibes (FR)
(74) Representative: de Beaumont, Michel

(57) **Abstract**

The present invention concerns a system for converting printed receipts (PTR) into data files comprising an optical reader for acquiring a digital image of a printed receipt in the form of a printed list containing at least object identifiers having a predetermined format, an optical character recognition means for extracting from the digital image at least the object identifiers, a search means for collecting information about the objects in a database on the basis of said object identifiers, a generating means for generating a data file comprising at least said information collected in the database, and a supply means for supplying said data file.

## Description

### FIELD OF THE INVENTION

The present invention concerns a device for converting printed lists of goods, products and analog, and their respective prices into electronic data files. More specifically, the invention relates to an automatic system for converting printed till receipts into an electronic format usable by a customer in his own computer.

### BACKGROUND OF THE INVENTION

Today, standard receipts printed at retail outlets, for example till receipts at the tills of a shopping center or a mall, contain a list of goods or products in the form of a summary, eventually truncated, of the names of the products, associated with their respective prices (and the number of exemplar bought). The summary of the product called hereafter "product identifier" is unique, i.e. each product of a given retail has a distinctive product identifier. Most often, the product identifiers on the till receipt are obtained by reading a bar code of each product and extracting the corresponding identifier from a database of a retail's computer.

The till receipts are made more and more intelligible for the customers to be capable of checking the receipt at the outlet of the shop. However, more and more customers own computers and use these computers to survey their personal budget. Specific softwares such as personal budget assistants exist to facilitate the book keeping or account keeping. One can also use general spreadsheets or general database software.

Today, a customer who wants to use the information of a till receipt in its own book keeping software has to re-enter (retype) all the information (in particular the names and prices of the products).

Another solution which comes in mind is to use the bar code codification already used to create the printed till receipts. A customer having a bar code reader can re-scan all the products he bought to obtain an equivalent of the list of products of his till receipt into his own computer. A drawback is that the customer has to re-scan all the products and has normally no access to the electronic-price lists of the retails or shops where he uses to go.

There is a need for an automated system for an easy conversion of the printed information on a receipt into an electronic format readable by book keeping, spreadsheet or database software.

The problems which have to be solved are, among others:
- to provide a reliable information about the products and their prices in the electronic format;
- to guaranty the security of the information contained in the retails database;
- to provide a system which is compatible with several electronic formats and with several printed formats;
- to maintain a printed intelligible product information on the till receipts, especially for the customers who do not want a conversion; and
- to be compatible with the existing till systems without needing any modifications of these systems.

A purpose of the present invention is to provide a system for converting printed till receipts into an electronic data file in a format readable by a book keeping, spreadsheet, or database software or analog.

Another purpose of the invention is to provide electronic information with more details than the printed receipt.

A further purpose of the invention is to provide a computer-based apparatus and method which does not require any modification to the existing till systems.

A still further purpose of the present invention is to provide a system which does not require a direct communication between the databases of the retail and the computer of the customer.

### BRIEF SUMMARY OF THE INVENTION

To attain the above purposes and others, the present invention provides a system connected with the database of the retail's computer for automatically converting a printed receipt containing a list of product information into an electronic data file reproducing the list and, preferably, comprising supplemental information with respect to the printed one. The printed list has a predetermined format and comprises at least, for each product, a product identifier. The supplied data file is in a format directly readable by a book keeping software spreadsheet, database software or analog of the user.

The present invention provides a system capable of reading printed documents and finding specific identifiers of the objects (products or analog) listed in the documents. With these information, the system searches into the database of the retail or analog complementary information about the products (for example, price, manufacturer's name, composition, etc.). The system collects the information and supplies a data file preferably in a table form in the format desired by the customer according to his book keeping software or analog, and containing at least the collected information.

The database may be accessed through a link to an external network such as Internet or a link to an internal network of the shop or mall in which is disposed the system to be connected, for example, to the product database of the shop or mall.

The same system is preferably shared by several shops in a same mall. In such a case, the search is able to recognize, in the printed receipt, a shop identifier or the printed format of a given shop for identifying the shop and selecting the corresponding database.

These purposes, features and advantages of preferred, non limiting, embodiments of the present invention will be described by way of example with reference to the accompanying drawings.

### BRIEF DESCRIPTION OF THE DRAWINGS

Figure 1 schematically represents the main elements of an exemplary embodiment of the system according to the present invention; and
Figure 2 schematically illustrates the conversion of a till receipt according to one exemplary embodiment of the present invention.

For clarity, only the elements useful to the understanding of the invention have been shown in the drawings. Especially, details of the programming steps according to the system of the invention will not be detailed as it will readily occur to those skilled in the art.

### DETAILED DESCRIPTION

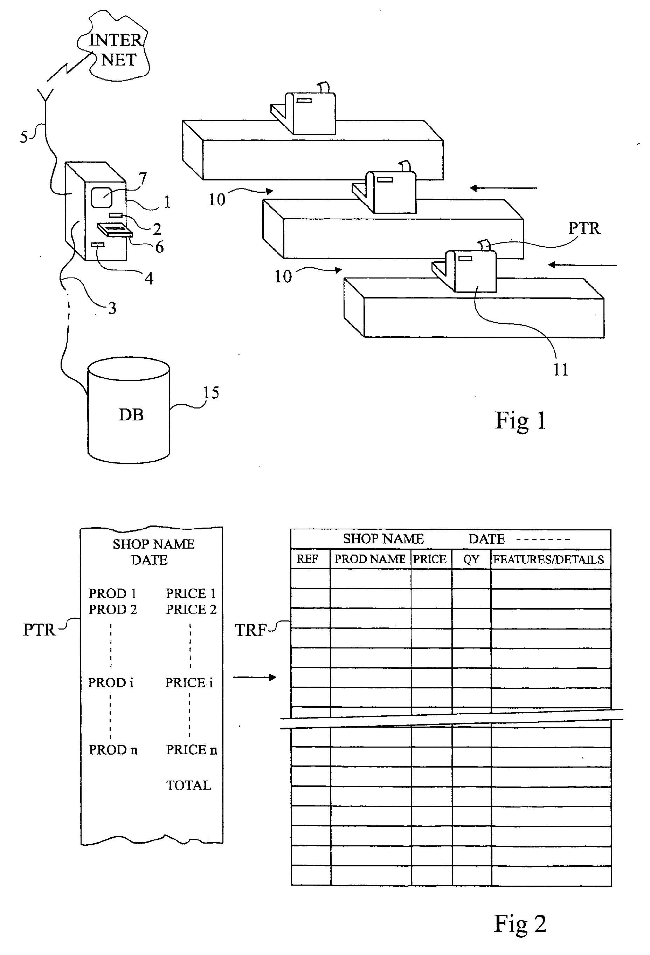

With reference to figures 1 and 2, one exemplary embodiment of the system according to the present invention includes a receipt reader 1, for example a till receipt reader. The reader 1 is preferably disposed in the vicinity of retail's outlets represented in figure 1 as lanes or aisles 10. Each lane is conventionally provided with a till 11 which supplies a printed till receipt PTR in printed form.

With reference to figure 2, an example of a standard till receipt is shown. This till receipt comprises, among others, a list of product identifiers PROD1, PRODi, ..., PRODn corresponding to the products bought by the customer. In regard to each product identifier, the price (PRICE1, PRICE2, PRICEi, ..., PRICEn) is also printed. Generally, the shop's name and the date are also indicated in the printed till receipt along with the total of the receipt.

According to the present invention, the receipt reader 1 comprises:
a slit 2 for introducing a till receipt in the device 1 or any analog introduction means;
an optical reader or any analog scanning device for reading the receipt;
an optical character recognition system, for example an optical character recognition software, using the digital picture obtained by the scanning of the receipt reader;
a database access 3 for accessing to a database 15 of the retail;
a search module that recognizes the location of the product identifiers in the printed list from a predetermined printed till receipt format (which is always the same for a given shop), and which collects information about the product in the database 15; and
at least a supply means 4 and/or 5 for supplying a digital electronic file of the converted till receipt.

According to a first embodiment, the supply means is a slit 4 for supplying a floppy disk or a CD-ROM containing the file of the till receipt in electronic format.

According to another preferred embodiment, the supplying means is a link 5 to an external transmission network like Internet.

According to the present invention, a customer having a printed till receipt introduces this receipt in the slit 2 of the reader 1. The reader then scans the receipt and executes an optical character recognition step in order to detect the list of the product identifiers PRODi printed in the till receipt.

According to a preferred embodiment of the invention, the recognition system does not take into account the prices of the products. Indeed, the main purpose of the recognition means is to obtain a list of the products in the form of characters which can be used to identify the products into the database 15 of the shop. Then, other information about products and in particular the prices can be extracted from the database to which the reader 1 is linked.

According to a preferred embodiment of the present invention, knowing the product identifiers of the list printed in the till receipt, the receipt reader 1 extracts from the database 15 several information about the products. For example, one can obtain not only the name, but also information relative to the composition of the product, its origin, manufacturer, etc.

Preferably, the receipt reader 1 also comprises a keyboard 6 or analog through which a customer indicates what kind of information he wants on the receipt file. The keyboard 6 can also be used by the customer to select a specific format for the receipt file. For example, the receipt reader may convert the electronic format of the receipt directly in a format readable by the specific book keeping, spreadsheet or database software of the customer. To perform this functionality, the receipt reader also comprises a screen 7 to display information to the customer. Alternatively, the keyboard can be omitted by using a touch screen.

In a mall, a same receipt reader can be used for reading till receipt printed by several shops. Each shop is generally identified in his printed till receipt with the shop's name. Therefore, the optical recognition character software can identify the shop and consequently the specific printed format of the till receipt of that shop to find more quickly the products' list in the printed till receipt. Alternatively, the shop is selected with the keyboard 6 in a displayed list of the shop formats available in the reader.

With reference to figure 2, the printed till receipt PTR is converted in a till receipt file TRF presented, for example, in a table form. According to the exemplary embodiment of figure 2, the file TRF comprises five columns indicating, respectively:
- the reference REF of the product, which may correspond to the standard product identifier;
- the detailed name (PRODname) of the product, comprising, for example, the commercial name, the name of the manufacturer, etc.;
- the price of the product;
- the quantity of the product bought by the customer in the current till receipt; and
- other features or details relative to the product.

In the top of the table TRF, one should also provide specific cells comprising the shop's name and the date of the till receipt.

With such an electronic till receipt, the customer may now directly import the list of products and prices in his book keeping software or analog.

According to a preferred embodiment of the present invention, the customer introducing his printed till receipt in the reader 1 may choose to store the information of that till receipt in the shop's database 15. Such a choice allows the shop to populate the specific database 15 of the shop with all the customers' purchasing history. The customer has to be identified, for example, by typing his name with the keyboard 6 or by introducing a specific identification card (for example his credit card) in a specific slit of the receipt reader.

An advantage of the present invention is that there is no need for any modification of the known till receipts or of the known tills of the retail outlets.

Another advantage of the present invention is that a customer who does not want to have an electronic format may still obtain quite intelligible printed till receipts at the outlets of the retails.

Another advantage of the present invention is that the customer has no direct access to the databases of the shop. Further, the system may be shared by several shops even preserving the confidentiality and security of the database of each shop.

Another advantage of the present invention is that the system, shared by several shops in a mall, may be adapted to the various printed receipt formats without needing a uniformity of these printed formats.

The implementation of the invention using known softwares and devices is in the ability of one with an ordinary skill in the art on the basis of the above functional description.

The above description has been made with reference to till receipts. However, more generally, the present invention may apply to any situation where paper format still remains the predominant method for information dissemination and where electronic categorization of these data is useful.

Another application example of the present invention could be to the guarantees or warranties that are typically inside products.

Having thus described at least one illustrative embodiment of the invention, various alterations, modifications and improvements will readily occur to those skilled in the art. Such alterations, modifications, and improvements are intended to be within the spirit and scope of the invention. Accordingly, the foregoing description is by way of example only and is not intended to be limiting. The invention is limited only as defined in the following claims and the equivalents thereto.

## Claims

1. A system for converting printed receipts (PTR) into data files (TRF) comprising:
an optical reader for acquiring a digital image from a printed receipt on which is printed a list containing at least object identifiers having a predetermined format;
an optical character recognition means for extracting from the digital image at least the object identifiers;
a search means for collecting information about the objects in a database (15) on the basis of said object identifiers;
a generating means for generating a data file comprising at least said information collected in the database; and
a supply means (4, 5) supplying said data file.

2. The system of claim 1, wherein the collected information about the objects comprise additional information with respect to the printed receipt.

3. The system of claim 1, wherein the predetermined format of the object identifiers is selected among several formats on the basis of a shop identifier recognized by the optical character recognition means.

4. The system of claim 1, also comprising means (6) for selecting a predetermined format for converting the printed list with the generating means.

5. The system of claim 1, wherein the supply means is a link (5) to an external network.

6. The system of claim 1, wherein the supply means is a means (4) for supplying a floppy disk, a CD-ROM or analog.
